# EUROPÄISCHE PATENTANMELDUNG

(11) **EP 4 729 282 A1**
(43) Veröffentlichungstag der Anmeldung: **22.04.2026**
(21) Anmeldenummer: 24206571.2
(22) Anmeldetag: 15.10.2024
(51) Int. Cl.: B32B 1/08, B32B 7/12, B32B 15/08, B32B 15/085, B32B 15/20, B32B 27/32, F16L 9/00

(54) **MEHRSCHICHTVERBUNDROHR**

(71) Anmelder: Uponor Innovation AB, 737 61 Virsbo (SE)
(72) Erfinder: Winterstein, Ralf, 98544 Zella-Mehlis (DE); Pluskwa, Christian, 069116 Singapore (SG); Callin, Tim, 98544 Zella-Mehlis (DE); Schirrmeister, Kevin, 98544 Zella-Mehlis (DE)
(74) Vertreter: Fenner, Seraina

(57) **Zusammenfassung**

Mehrschichtverbundrohr vorzugsweise für Kälte- und Klimasysteme beinhaltend ein Innenrohr aus einem metallischen Werkstoff und einen das Innenrohr umgebenden Aussenmantel aus einem Kunststoff, wobei das Innenrohr aus Aluminium besteht.

## Beschreibung

Die Erfindung betrifft ein Mehrschichtverbundrohr vorzugsweise für Kälte- und Klimasysteme beinhaltend ein Innenrohr aus einem metallischen Werkstoff und einen das Innenrohr umgebenden Aussenmantel aus einem Kunststoff.

Da die Temperaturen weltweit jedes Jahr weiter steigen, nimmt die Nachfrage nach Kühl- und Klimasystemen stetig zu. Für solche Systeme werden meist moderne Kupferrohre eingesetzt, jedoch sind diese nicht frei von Nachteilen.

Probleme wie Leckagen und die mögliche Explosionsgefahr während eines Lötvorgangs bei der Installation von solchen Systemen haben zu Bedenken geführt.

Die DE 3009326 A1 offenbart ein flüssigkeitsführendes Rohr für Wärme-, Klima- oder Sanitäranlagen. Das Rohr weist am Innenumfang eine Kupferschicht auf und ist von einem Polymerrohr umgeben. Nachteilig ist wie bereits erwähnt die verwendete Kupferschicht, die einerseits höhere Risiken bei der Verarbeitung mit sich bringt und zudem die Umwelt stark belastet, wie auch die Kosten für Kupfer stetig ansteigen.

Die DE 197 31 580 A1 offenbart ein Verbundrohr mit einem Innenrohr aus Kunststoff und einem metallischen Zwischenrohr als Diffusionssperre sowie einem Aussenrohr aus modifiziertem PE. Es hat sich gezeigt, dass die Innenschicht aus Kunststoff meist nicht kühlmittelbeständig ist, was den Unterhalt von Kälte- und Klimasystemen aufwendiger macht.

Aus dem Stand der Technik sind Mehrschichtverbundrohre bekannt, die ein metallisches Zwischenrohr aus Aluminium offenbaren und die eine Innenschicht aus PE-RT aufweisen. Es hat sich jedoch gezeigt, dass beim Einsatz für Kälte- oder Klimaanlagen sich das Kühlmedium mit der Zeit verfärbt und Rückstände aufweist, weshalb davon ausgegangen wird, dass das PE-RT nicht kühlmittelbeständig ist und dadurch ein Mehraufwand für den Unterhalt bzw. auch Schäden an den Kälte- und Klimasystemen entstehen können.

Es ist Aufgabe der Erfindung ein Mehrschichtverbundrohr vorzuschlagen, das kühlmittelbeständig ist und den Druckanforderungen standhält sowie für den Einsatz für Kälte- oder Klimasysteme geeignet ist.

Diese Aufgabe wird erfindungsgemäss dadurch gelöst, dass das Innenrohr aus Aluminium besteht.

Das erfindungsgemässe Mehrschichtverbundrohr vorzugsweise für Kälte- und Klimasysteme beinhaltet ein Innenrohr aus einem metallischen Werkstoff. Das Innenrohr dient der Sicherstellung der Druckfestigkeit, die bei einem Rohrdurchmesser von ¼" bei rechnerischen 130 bar liegt. Das erfindungsgemässe Mehrschichtverbindrohr weist einen das Innenrohr umgebenden Aussenmantel aus Kunststoff auf, wobei das Innenrohr aus Aluminium besteht. Auf dem Innendurchmesser des Aluminiuminnenrohres ist kein weiteres Material aufgetragen. Die innerste Oberfläche des Mehrschichtverbundohres ist Aluminium. Es ist vorteilhaft, wenn das Innenrohr aus einem nahtlosen Aluminiumrohr gebildet ist. Vorzugsweise ist das Mehrschichtverbundrohr ein Extrusionsrohr, wobei das Aluminiuminnenrohr und der Aussenmantel aus Kunststoff co-extrudiert sind.

Es ist vorteilhaft, wenn das Innenrohr aus Aluminium einen direkten Kontakt mit einem Kühlmedium aufweist und Kühlmittelbeständig ist. Es hat sich gezeigt, durch den Verzicht auf ein zusätzliches Material am Innendurchmesser des Aluminiuminnenrohr, dass keine Qualitätsveränderung des Kühlmediums zu verzeichnen ist. Vorzugsweise wird eine Aluminium-Li-Knetlegierung verwendet vorzugsweis der Serie 1000 oder 8000, da diese die benötigte Biegbarkeit aufgrund des superplastischen Verhaltens auch bei kleineren Rohrdimensionen mit sich bringt.

Vorzugsweise besteht der Aussenmantel aus einem Polyolefin oder TPO Kunststoff. Speziell bei kleineren Dimensionen ist damit die Biegbarkeit gewährleistet. Bei grösseren Dimensionen bei denen die Biegbarkeit nicht derart wesentlich ist sind auch Kunststoffe wie PPRCT, PVC und PPR einsetzbar.

Es hat sich als vorteilhaft gezeigt, wenn der Aussenmantel aus Kunststoff Additive zur UV-Beständigkeit und/oder für einen Flammschutz aufweist. Dadurch lassen sich die Mehrschichtverbundrohre auch in Bereiche verlegen, die dem Sonnenlicht ausgesetzt sind und aufgrund des Additivs zur UV-Beständigkeit nehmen sie keinen Schaden. Das Additiv für einen Flammschutz das optional dem Aussenmantel zugemischt werden kann, ermöglicht es die Brandlast zu verringern, wodurch solche Rohrleitungen auch in Bereiche eingebaut werden können, wo strengere Vorschriften an den Brandschutz gestellt werden.

Es ist vorteilhaft, wenn zwischen dem Aussenmantel und dem Innenrohr ein Haftvermittler angeordnet ist. Derartige Haftvermittlerschichten sind auf dem Gebiet der Mehrschichtverbundrohre allgemein bekannt. Als Haftvermittler werden bevorzugt lonomere, Ethylvinylalkohol oder polyolefinische Haftvermittler eingesetzt.

Vorzugsweise weist das Innenrohr eine Wandstärke zwischen 0.2 und 3 mm auf. Speziell bevorzugt hat sich gezeigt, wenn das Innenrohr eine Wandstärke zwischen 0.4 und 2.2 mm aufweist. Mit dieser Wandstärke lässt sich das Mehrschichtverbundrohr gut plastisch umformen bzw. biegen und die Leitungen für das Kühlmedium des Klimasystems einfach verlegen.

Es ist vorteilhaft, wenn das Innenrohr einen Innendurchmesser zwischen 3 und 30 mm aufweist. Vorzugsweise werden für Kälte- oder Klimasysteme Rohre eingesetzt mit einem Innendurchmesser von 1/4" bis 7/8".

Als vorteilhaft hat sich gezeigt, wenn der Aussenmantel eine Dicke von 0.3 bis 3 mm aufweist. Dadurch wir das innenliegende Aluminiumrohr geschützt und das Mehrschichtverbundrohr ist dennoch genügend biegsam, um die Leitungen für Kälte- oder Klimasysteme einfach verlegen zu können.

Es ist vorteilhaft, wenn eine Isolationsschicht um den Aussenmantel angeordnet ist. Wobei die Isolationsschicht vorzugsweise aus einer Schaumstoffschicht oder einer Vakuumisolationsschicht (VIP) gebildet ist.

Alle Ausgestaltungmöglichkeiten sind untereinander frei kombinierbar.

## Patentansprüche

1. Mehrschichtverbundrohr vorzugsweise für Kälte- und Klimasysteme beinhaltend ein Innenrohr aus einem metallischen Werkstoff und einen das Innenrohr umgebenden Aussenmantel aus einem Kunststoff, **dadurch gekennzeichnet, dass** das Innenrohr aus Aluminium besteht.

2. Mehrschichtverbundrohr nach Anspruch 1, **dadurch gekennzeichnet, dass** das Innenrohr einen direkten Kontakt mit einem Kühlmedium aufweist und kühlmittelbeständig ist.

3. Mehrschichtverbundrohr nach einem der Ansprüche 1 oder 2, **dadurch gekennzeichnet, dass** der Aussenmantel aus einem Polyolefin oder TPO besteht.

4. Mehrschichtverbundrohr nach einem der Ansprüche 1 bis 3, **dadurch gekennzeichnet**, zwischen dem Aussenmantel und dem Innenrohr ein Haftvermittler angeordnet ist.

5. Mehrschichtverbundrohr nach einem der Ansprüche 1 bis 4, **dadurch gekennzeichnet, dass** das Innenrohr eine Wandstärke zwischen 0.2 und 3 mm aufweist.

6. Mehrschichtverbundrohr nach einem der Ansprüche 1 bis 5, **dadurch gekennzeichnet, dass** das Innenrohr einen Innendurchmesser zwischen 3 und 30 mm aufweist.

7. Mehrschichtverbundrohr nach einem der Ansprüche 1 bis 6, **dadurch gekennzeichnet, dass** der Aussenmantel eine Dicke von 0.3 bis 3 mm aufweist.

8. Mehrschichtverbundrohr nach einem der Ansprüche 1 bis 7, **dadurch gekennzeichnet, dass** um den Aussenmantel eine Isolationsschicht angeordnet ist.

9. Mehrschichtverbundrohr nach einem der Ansprüche 1 bis 8, **dadurch gekennzeichnet, dass** das Mehrschichtverbundrohr ein nahtloses Innenrohr aufweist.

10. Mehrschichtverbundrohr nach einem der Ansprüche 1 bis 9, **dadurch gekennzeichnet, dass** das Mehrschichtverbundrohr als Extrusionsteil, vorzugsweise Co-Extrusionsteil ausgebildet ist.
